# EUROPEAN PATENT SPECIFICATION

(11) **EP 2 260 573 B1**
(45) Date of publication and mention of the grant of the patent: **28.12.2011**
(21) Application number: 09728351.9
(22) Date of filing: 31.03.2009
(51) Int. Cl.: H02P 9/10, G05F 1/56, G05F 1/575, H02J 3/01, H02M 7/155

(54) **IMPROVED VOLTAGE AND CURRENT CONTROL METHOD APPLIED TO A CONTROL APPARATUS FOR A DEVICE FOR THE PRODUCTION OF ELECTRICAL ENERGY**
EIN AUF EINE STEUERUNGSVORRICHTUNG FÜR EIN GERÄT ZUR ERZEUGUNG ELEKTRISCHER ENERGIE ANGEWANDTES VERBESSERTES SPANNUNGS- UND STROMREGELUNGSVERFAHREN
PROCÉDÉ DE COMMANDE DE TENSION ET DE COURANT AMÉLIORÉ APPLIQUÉ À UN APPAREIL DE COMMANDE POUR DISPOSITIF DE PRODUCTION D'ÉNERGIE ÉLECTRIQUE

(30) Priority: 31.03.2008 IT VI20080075
(43) Date of publication of application: 15.12.2010
(73) Proprietor: Italsea S.R.L., 36078 Valdagno (VI) (IT)
(72) Inventor: FAGGION, Alessandro, I-36078 Valdagno (VI) (IT)
(74) Representative: Bonini, Ercole
(86) International application number: PCT/EP2009/053788
(87) International publication number: WO 2009/121867

(56) References cited:
- CN-A- 101 141 100
- JP-A- 8 251 928
- JP-A- 62 100 171
- JP-A- 2007 129 845
- US-A1- 2007 014 132

## Description

The present invention concerns an improved method for voltage and current control for an inverter device, particularly suitable for use in a device for the production of electrical energy.

Moreover, the invention relates to a control apparatus to which the improved control method is applied, and to a device for the production of electrical energy in which said control apparatus is installed.

It is common knowledge that in order to use various types of electrically-operated equipment in situations where a connection to the national electricity grid is unavailable, particular means like generator sets or systems for the production of alternative energy, for example wind energy, are used, which enable the independent generation of the electrical energy required.

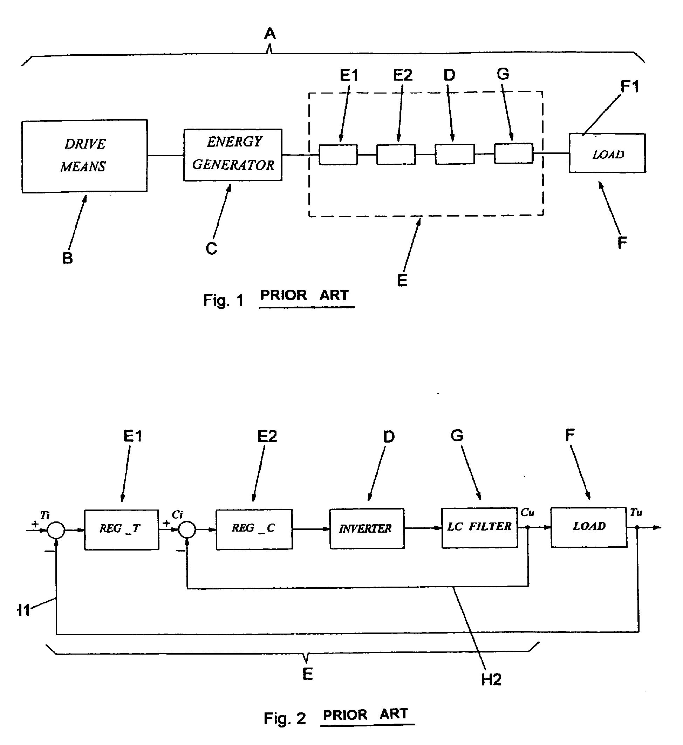

For example, generator sets **A** of the known art, as shown in Figure 1, comprise drive means **B**, consisting of an internal combustion engine or the like, which enable the transmission of a rotational movement to one or more electrical energy generators **C**, connected downstream.

In order to properly use the electrical energy generated, it naturally becomes necessary to transform it and stabilise its characteristics.

That is why one or more inverter devices **D**, and their control means **E**, usually of the feedback type, are installed downstream of the electrical energy generators **C**.

Finally, the output from the above-mentioned inverter devices **D** is delivered to the user devices **F1**, which may have different internal and behavioural characteristics, making it necessary to design the control apparatus located downstream so as to keep the whole configuration as stable as possible in the various operating conditions.

It is also common knowledge that these generator sets **A** for generating electrical energy can be used for civil and domestic applications only if compliance is assured with the ISO standard 8528-3, which establishes that these devices must meet accurate specifications in terms of stability, prompt response and signal purity.

In the case of the inverter devices **D**, in particular, the rated characteristics include a rated output voltage coming between 100 and 120 V or 220 and 240 V, with a frequency that can be 50 or 60 Hz.

In addition, the required value of the total harmonic distortion, or THD, must be less than 2% of the fundamental, while the rated power of the device is comprised between 5 and 10 kW.

It is likewise well known that the control apparatus **E** for an inverter device **D** carried out according to the known art, as shown in Figure 2, comprises a voltage regulator assembly **E1** and a current regulator assembly **E2**, as well as an inverter device **D**, of course, and a user device **F1**, represented by the load **F**, and a filter **G** of the LC type, the main function of which is to reduce the voltage fluctuations on the load, as described, for example, in document JP 62100174. As shown in the flow chart, a cascade structure is clearly adopted, consisting of an internal current ring and an external voltage ring, in order to exploit the different dynamics of the apparatus, enabling both improved performance and control of the load voltage and current by means of the corresponding references.

In particular, the voltage and current are digitally controlled in a microprocessor that processes the input signals and generates the corresponding output signals in order to obtain the previously-specified performance.

More in detail, as shown in Figure 2 illustrating the known art, the configuration of the control apparatus **E** comprises a first voltage regulator E**1** that controls and stabilises the input voltage, taking for reference the output voltage from the load, which is fed back through the connection **H1**.

This is followed by the regulation of the input current, taking for reference the current measured upstream of the load, which is fed back to the regulator assembly along the path **H2**.

Then comes the actual inverter device **D**, which transforms the voltage and current characteristics by means of one of the known modulating techniques, such as pulse width modulation, or PWM.

Upstream of the load **F** there is the LC filter **G** that enables the harmonics to be attenuated at the modulation frequency and its multiples in the output voltage from the inverter device.

As for the load **F**, which in practice consists of the user **F1**, this may be of various types and behave differently, depending on its resistive or inductive characteristics, or nonlinearity.

This type of configuration, and the other equivalent configurations of the known art, pose a series of drawbacks, however, as listed below.

As mentioned earlier, the great variety of possible characteristics of the load **F** may give rise to a first, particularly evident drawback of this type of configuration, which consists in the considerable difficulty in sizing the current regulator **E2** with adequate values to ensure stability.

In fact, this variability makes it difficult to simultaneously guarantee both stability and a prompt response in all operating conditions.

Thus, under different loading conditions, the same dynamic and stability requirements for the current ring are met with different values of the regulator parameters.

A known solution for containing this drawback consists in placing a resistance with a given value, called a "bleeder resistance" in technical jargon, in parallel with the load F.

In addition to increasing the stability of the system over a wider range of conditions than in the previously-described cases, this solution also introduces several major drawbacks, however.

A first drawback concerns the fact that the inclusion of an additional component, i.e. the resistance, increases the manufacturing costs of the control apparatus as a whole.

A second drawback lies in that the physical dimensions of the PCB needed for the control have to be increased in order to insert the resistance in parallel with the load, consequently increasing the space occupied by the control apparatus as a whole.

Another, but not necessarily the least drawback lies in that the presence of the bleeder resistance in parallel with the load means there is a current absorption even when the equivalent resistance of the load is infinite.

The choice of the value for the bleeder resistance is thus based on a compromise between the improvement in the control's performance and the power absorption in no-load conditions, which affects the efficiency of the system.

This means that, although the introduction of the resistance contributes to improving the stability of the system in various conditions, the range in which the stability of the system is guaranteed under different types of load is still somewhat limited.

Concerning the combination of the voltage regulator with the LC filter, as mentioned previously, this guarantees the stability of the system and the attenuation of the harmonics in the presence of linear loads.

This also entails a disadvantage, however, in that - in the presence of a non-linear load - the inverter device's modulating action, in combination with the LC filter, is not enough to effectively reduce the presence of multiple harmonics of the fundamental on the output voltage.

A further drawback consequently consists in the fact that the system does not enable an adequate, stable operation in all load conditions.

The present invention aims to overcome the above-listed drawbacks.

The first object of the invention is to achieve an improved voltage and current control method in an inverter device that guarantees the stability of the configuration over a wider range of load variability than in the systems of the known art.

Another object of the invention is to achieve a control method capable of attenuating the harmonics in the output voltage, both during transients due to sudden changes in the load, and by taking effect more slowly, compensating for the harmonics and ensuring minimal steady-state errors and THD.

Another object of the invention consists in achieving a control method with better performance than those of the known art, without affecting the industrialisation costs.

Another, but not necessarily the least object of the invention is to achieve an improved control method that enables the dimensions of the control apparatus as a whole to be limited.

The above objects are achieved by an improved method for controlling the voltage and current of an inverter device with characteristics according to the method claim 1 and the corresponding control apparatus according to claim 14.

The dependent claims describe further characteristics of the control method, and of the device for the production of electrical energy in which the control apparatus is installed, in order to achieve the set objects.

The control method that is the subject of the invention advantageously makes the generator more sturdy in relation to DC busbar voltages disturbed by harmonics relating to the imperfect nature of the sine waves of the electromotive forces (emf) produced by the permanent-magnet generator.

Another advantage of the control method lies in that it enables an improved control and regulation of the internal combustion engine, or other such means for making the electrical energy generator rotate.

The above-mentioned objects and advantages are illustrated in greater detail in the description of a preferred embodiment of the invention that is given below as a nonlimiting example with reference to the attached drawings, wherein:
- Figure 1 schematically illustrates the known art, with a device for the production of electrical energy;
- Figure 2 illustrates the known art, with the equivalent circuit diagram of the control apparatus installed in the device for the production of electrical energy of Figure 1;
- Figure 3 schematically shows the device for the production of electrical energy;
- Figure 4 shows the equivalent circuit diagram of the control apparatus contained in the device for the production of electrical energy of Figure 3, with the control elements of the invention;
- Figure 5 shows the equivalent circuit diagram of the internal bridge inverter device and the three-level modulation signal with a triangular carrier;
- Figure 6 schematically shows the control apparatus in which the method of the invention is implemented;
- Figure 7 shows a flow chart of the control method that is the subject of the invention;
- Figure 8 shows the equivalent circuit diagram of the control apparatus in which the contribution of the virtual bleeder resistance can be observed;
- Figure 9 shows the equivalent circuit diagram of the introduction of the repetitive control in parallel with the voltage regulator;
- Figure 10 shows a digital representation of the repetitive control introduced in the method of the invention;
- Figure 11 is a table showing the results of stimulations with different R and C values of the non-linear load;
- Figure 12 is a table showing the effects on the control apparatus of changes to the components of the attenuator filter.

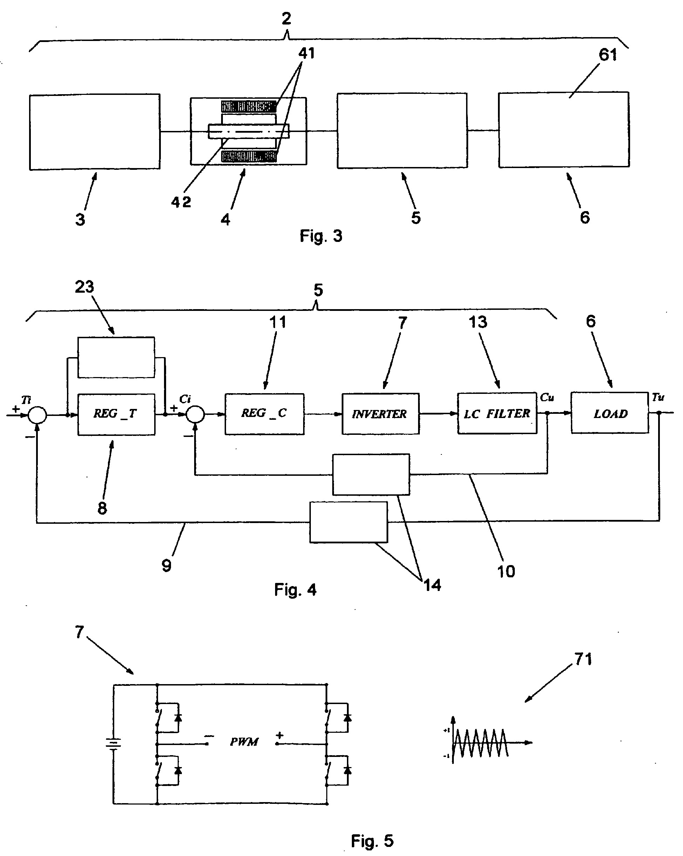

The method of the invention, indicated as a whole by 1, is particularly and advantageously suitable for use in a device for the production of electrical energy which, in the embodiment described herein, is a generator set **2**, as shown in Figure 3.

In other embodiments of the invention, the device for the production of electrical energy may be a system for the production of alternative energy, for example wind energy or a different type of energy, provided that it belongs to the known art.

As shown in Figure 3, the generator set **2** is designed to connect drive means **3** with a device for generating electrical energy **4**, the combination of which enables the kinetic energy generated to be transformed into electrical energy. In fact, the rotational movement generated by the drive means **3** is transmitted to the generator device **4**, and to its rotor element **41**, in particular, which thus facilitates the induction of electrical energy in the windings of the stator element **42** inside the generator device.

In the particular embodiment described herein, the drive means **3** comprise an internal combustion engine.

In different embodiments, not described herein, the drive means **3** may comprise any other type of motor or means belonging to the known art that enables the generation of kinetic energy, and of a rotational motion in particular.

As concerns the generator device **4**, this is of the three-phase type and the rotor **41** consists of permanent magnets.

In other embodiments, the generator device **4** may naturally have different characteristics, provided that they enable the generation of electrical energy and provided that they belong to the known art.

It is likewise evident and well known that the electrical energy generated by the generator device **4** does not have characteristics suitable for its use directly as the input to a load **6**, as shown in the layout of Figure 3.

So, downstream of the generator device **4**, the generator set **2** comprises a control apparatus **5** that enables the voltage and current delivered to the input of the load **6** to be regulated.

At this point, it is important to emphasise that the method of the invention **1** applies to this particular control apparatus **5.**

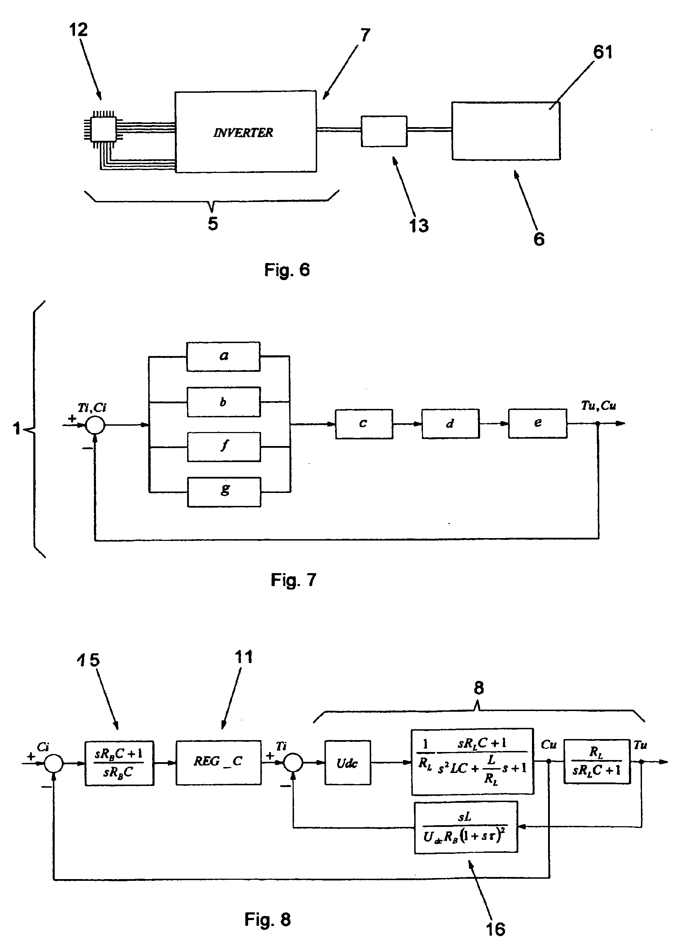

In particular, this control apparatus **5**, as shown in Figure 4, comprises an inverter device **7** configured in a feedback arrangement with a closed double ring, by means of which one of the operations specified in the method **1**, illustrated in Figure 7, is carried out.

This operation, indicated by **c**, consists in converting the characteristics of the voltage **Ti** and the current **Ci** delivered as input to the control apparatus **5**, so as to provide the load **6**, represented in practice by a user device **61**, with a voltage **Tu** and a current **Cu** having suitable characteristics.

The inverter device 7 is preferably, but not necessarily, a single-phase internal bridge inverter, as shown in the diagram of Figure **5**.

Moreover, in the particular embodiment described herein, a three-level sine wave modulation with a triangular carrier **71** has been applied to the inverter device **7**.

This advantageously enables a reduction of the harmonic content by comparison with any other modulation, on two levels for instance.

In different embodiments of the invention it may also be possible to use an inverter device **7** with different characteristics and another type of modulation, provided that both the elements belong to the known art.

In the particular configuration described herein, moreover, the control apparatus **5** comprises a voltage regulator **8** that enables another operation a of the method **1** to be implemented, involving the regulation of the input voltage **Ti** by means of a first feedback control, taking for reference the output voltage from the load **6** fed back along the pathway **9**.

According to the embodiment described herein, the voltage regulator **8** is of the highly dynamic resonant type that consequently takes effect during the transients due to a sudden change in the load **6**.

As for a not in bold style a third operation involved in the method **1**, indicated by the letter **b**, this consists in the regulation of the input current **Ci** delivered to the control system **5** by means of a second feedback control that collects the current signal upstream of the load **6** and uses this signal, via the path **10**, as an input reference for a current regulator **11**, as shown in Figure 4.

Clearly, in other embodiments, the current regulator **11** may be of a different type, provided that it belongs to the known art.

For the current regulator **11**, as for the voltage regulator **8**, the resonant type was designed and implemented in the particular embodiment described herein. In another embodiment, not described herein, the current regulator **11** may be of the proportional integral type (PI), or of any other type suited to the specifications and design needs.

Obviously, all the variants of the type of current regulator **11** must belong to the known art.

The current regulator **11**, the voltage regulator **8** and consequently also the corresponding feedback controls are implemented by means of a mathematical algorithm in a microprocessor **12** connected to the inverter device **7**, as shown in Figure 6, enabling the exchange of the input and output signals between the two components.

Moreover, the method **1** of the invention involves an additional operation, indicated by **d** in Figure 7, which enables an attenuation of the harmonics at the modulation frequency and its multiples occurring in the output voltage **Tu**, by means of the introduction of an attenuator filter **13**, located immediately upstream of the load **6**, as shown in Figure 4.

The attenuator filter **13** is preferably, but not necessarily, of the LC type. Finally, the pre-characterising operations of the method 1 include the operation **e**, involving the use of the output voltage **Tu** and current **Cu** by the above-mentioned load **6.**

Naturally, the load **6**, as mentioned previously, represents various types of user device **61** and may consequently have different structural and behavioural features that imply a different response from the control system **5**, located upstream.

In the particular embodiment described herein, the load **6** is of the resistive type, but this does not rule out the possibility, in other embodiments, of the load **6** being of inductive and/or non-linear type.

According to the invention, the method **1** involves two further operations in addition to those described previously.

In particular, the first operation **f** consists in stabilising the characteristics of the output voltage **Tu** and current **Cu** to suit a wider variety of types of load **6** by comparison with the stability guaranteed by the configurations of the known art.

Conceptually, the operation **f** takes place simultaneously with the operations **a** and **b** for regulating the voltage and the current, respectively, and involves the insertion of a virtual resistance, not represented in the figures and called a virtual "bleeder' resistance, which simulates a physical bleeder resistance placed in parallel with the load **6.**

Unlike the introduction of a physical bleeder resistance which in the known art is placed in parallel with the load **6**, its virtualisation by means of suitable transfer functions **14**, as showed in Figure 4, advantageously enables the elimination, as already mentioned in the objects of the invention, both of the costs of the physical component and of the physical space needed to insert the resistance in the control apparatus **5**.

Another very important positive feature deriving from the introduction of the virtual resistance lies in that it is no longer necessary to select its value on the basis of a compromise between the improvement in the performance of the control apparatus **5** and the power absorption under no-load conditions, which has a negative fallout on the system's performance.

With the virtual resistance implemented by the transfer functions **14**, in fact, the power absorption occurring with the physical bleeder resistances of the known art no longer occurs, and therefore it is possible to reduce the value of the resistance itself to increase stability without increasing resistive losses.

As shown in detail in the equivalent circuit diagram of the control apparatus **5** in Figure 8, this virtual resistance is included in the apparatus by adding one or more transfer functions that contain its contribution in the closed double ring feedback configuration.

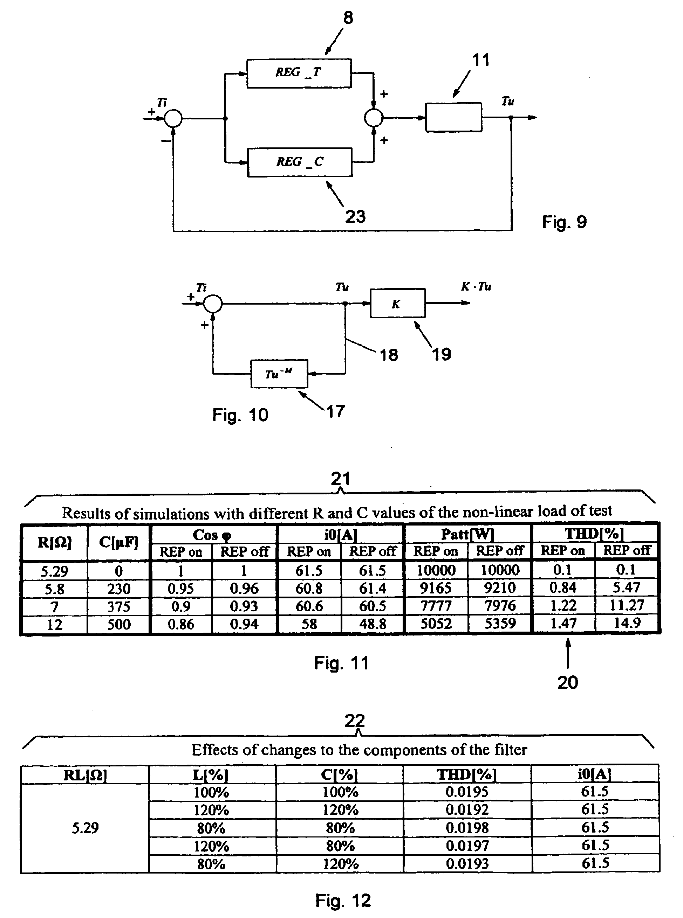

In particular, it should be noted that the control apparatus **5** comprises the contribution of the virtual resistance value, indicated as **Rb**, both for the numerator and for the denominator of the transfer function of the assembly **15**, and for the denominator of the transfer function of the feedback assembly **16**. As concerns the second operation **g**, introduced by the method 1 of the invention, this consists in achieving a further attenuation of the harmonics in parallel with the voltage regulating operation **a**, as shown in Figure 9.

This further attenuation operation involves the implementation of a repetitive control **23**.

in particular, in the embodiment described herein and illustrated schematically in Figure 10, the operation **g** involves returning the output voltage, with the corresponding periodic disturbances, as indicated in the figure with the assembly **17**, to the input of the repetitive control along the feedback path **18** after a number **M** of sampling periods.

As shown in Figure 10, the repetitive control **23** also comprises an assembly **19** with a gain coefficient **K** that is delivered to the output voltage **Tu**. In conclusion, this second operation **g** takes effect more slowly than the operation **a** completed by the voltage regulator **8**, as described previously, thereby compensating for the harmonics on the output voltage and ensuring minimal steady-state errors and THD.

In addition, this introduction enables a better attenuation of the harmonics in the output voltage **Tu** by comparison with the configurations of the known art, even in the case in which the load **6** is non-linear.

Finally, both the operation **f** for stabilising the control apparatus **5** with the virtual resistance, and the further operation **g** for attenuating the harmonics, done by the repetitive control **23**, are implemented with a mathematical algorithm in the microprocessor **12**, already contained in the control apparatus.

The results of experiments conducted have demonstrated, as shown in the right-hand column **20** of the table **21** in Figure 11, that the introduction of the attenuation operation **g** by means of the repetitive control **23** achieves a considerable reduction in the percentage of THD for different characteristics of resistance **R** and capacitance **C** of a load of non-linear type.

For instance, for a value of **R** = 5.8 Ohm and **C** = 230 µF, the value of the THD changes from 5.47% without the repetitive control enabled to 0.84% with the control enabled.

A further factor to consider for the structural design of the control apparatus **5** lies in that each of the passive components used to create the attenuator filter **13** has a certain variability with respect to the rated value declared by the manufacturer, and this means consequently worse performance of the whole control apparatus **5**.

That is why a valid control apparatus **5** must also have suitable characteristics to guarantee sufficient insensitivity to the above-mentioned parametric variations.

On this issue, based on experiments conducted with the repetitive control system **23**, as shown in the table **22** in Figure 12, in conditions where the load resistance is fixed and the values of inductance and of the capacitor vary by 20% with respect to the rated values, the percentage of the THD does not vary in an appreciable manner.

Based on the above considerations, it is therefore clear that the method of the invention, applied to the control apparatus installed in the device for the production of electrical energy, achieves all the previously stated objects.

In particular, the invention fulfils the object of achieving an improved method for controlling the voltage and current of an inverter device that guarantees the maintenance of a stable configuration over a wider range of load variability than can be achieved with the systems of the known art.

Another object fulfilled is the implementation of a control method that attenuates the harmonics in the output voltage both during transients due to sudden changes in the load and by taking action more slowly, compensating for the harmonics and ensuring minimal steady-state errors and THD.

Another object fulfilled consists in the implementation of a control method ensuring better performance than those of the known art, while preserving the industrialisation costs unchanged.

Moreover, the object to achieve an improved control method that enables the dimensions of the entire device to be limited is also fulfilled.

In the executive phase, the method, the control apparatus and the device for the production of electrical energy may undergo modifications and variants, not described or illustrated herein, implemented for the purpose of improving their functionality and making their manufacture more economical.

Any such executive variants not described herein, and any others not mentioned, shall be deemed to be protected by the present patent, provided that they come within the scope of the claims that follow.

Where technical features mentioned in any claims are followed by reference signs, those reference sings have been included for the sole purpose of increasing the intelligibility of the claims and accordingly such reference signs do not have any limiting effect on the interpretation of each element identified by way of example by such reference signs.

## Claims

1. Method for controlling the voltage and the current in an inverter device (7), in a feedback configuration with a closed double ring, comprising the following operations:
a) regulating the input voltage (Ti) by means of a first feedback control that collects the voltage signal output (Tu) from a load (6) and uses it as a reference at the input of a voltage regulator (8);
b) regulating the input current (Ci) by means of a second feedback control that collects the current signal (Cu) upstream of said load (6) and uses it as a reference at the input of a current regulator (11);
c) converting the input characteristics of said voltage (Ti) and said current (Ci) by means of an inverter device (7);
d) attenuating the harmonics in said output voltage (Tu) by means of a first attenuation operation with the aid of an attenuator filter (13);
e) using said output voltage (Tu) and current (Cu) in said load (6);
f) stabilising the characteristics of said output voltage (Tu) and current (Cu) during said voltage regulating operation (a) and said current regulating operation (b);
**characterised in that** it also comprises the following operation:
g) achieving a further attenuation of the harmonics by implementing a repetitive control (23) that takes place in parallel with said voltage regulating operation (a), wherein this attenuation takes effect more slowly than the operation (a) completed by the voltage regulator (8).

2. Method according to claim 1), **characterised in that** said repetitive control (23) involves the insertion of the transfer function of the disturbance signal to eliminate so as to compensate for the harmonics in said output voltage (Tu).

3. Method according to any one of the previous claims, **characterised in that** said repetitive control (23) involves the repeated proposal for reference of a sample of said output voltage (Tu) as input after one or more sampling periods.

4. Method according to any one of the previous claims, **characterised in that** said repetitive control (23) is implemented with a mathematical algorithm in a microprocessor (12).

5. Method according to claim 1), **characterised in that** said operation (f) to stabilise the characteristics of said output voltage (Tu) and said output current (Cu) involves the insertion of a virtual resistance in parallel with said load (6).

6. Method according to claim 5), **characterised in that** said stabilising operation (f) involves the addition of one or more transfer functions (14) equivalent to said virtual resistance in said feedback configuration with a closed double ring in which said voltage regulation (a) and said current regulation (b) take place.

7. Method according to claim 6), **characterised in that** said one or more transfer functions are implemented with a mathematical algorithm in said microprocessor (12).

8. Method according to any one of the previous claims, **characterised in that** said inverter device (7) is of the single-phase internal bridge type.

9. Method according to any one of the previous claims, **characterised in that** the modulation (71) applied to said single-phase internal bridge inverter device (7) is of the three-level sine wave type with a triangular carrier.

10. Method according to any one of the previous claims, **characterised in that** said load (6) is of the resistive type or the non-linear type.

11. Method according to any one of the previous claims, **characterised in that** said attenuator filter (13) is of the LC type and it is located immediately before said load (6).

12. Method according to any one of the previous claims, **characterised in that** said voltage regulator (8) is of the resonant type and it is implemented with a mathematical algorithm in said microprocessor (12).

13. Method according to any one of the previous claims, **characterised in that** said current regulator (11) is of the resonant type or of the proportional integral type (PI) and it is implemented with a mathematical algorithm in said microprocessor (12).

14. Voltage and current control apparatus comprising an inverter device (7) connected to a microprocessor (12) for processing and exchanging input and output signals, and an attenuator filter (13) located downstream of said inverter device (7), wherein said microprocessor (12) comprises:
a) a first feedback control that collects the voltage signal output (Tu) from a load (6) and uses it as a reference at the input of a voltage regulator (8) so as to regulate the input voltage (Ti);
b) a second feedback control that collects the current signal (Cu) upstream of said load (6) and uses it as a reference at the input of a current regulator (11) so as to regulate the input current (Ci);
c) means configured to convert the input characteristics of said voltage (Ti) and said current (Ci) with the aid of the inverter device (7);
d) an attenuator filter (13) for attenuating the harmonics in said output voltage (Tu);
e) means configured to use said output voltage (Tu) and current (Cu) in said load (6);
f) means configured to stabilise the characteristics of said output voltage (Tu) and current (Cu) during said voltage regulating operation (a) and said current regulating operation (b);
**characterised in that** it also comprises means configured to:
g) achieve a further attenuation of the harmonics by implementing a repetitive control (23) that takes place in parallel with said voltage regulating operation (a), wherein this attenuation takes effect more slowly than the operation (a) completed by the voltage regulator (8).

15. Device for the production of electrical energy of the type comprising drive means (3) connected to an electrical energy generator device (4), **characterised in that** it comprises an apparatus (5) for controlling the voltage and current generated by said generator device (4) carried out according to claim 14.

## Patentansprüche

1. Methode zur Kontrolle von Spannung und Strom in einer Wechselrichtervorrichtung (7), in einer Feedback-Konfiguration mit geschlossenem Doppelkreis, folgende Vorgänge umfassend:
a) Regulierung der Eingangsspannung (Ti) über eine erste Feedback-Kontrolle, die das Ausgangsspannungs-signal (Tu) von einer Last (6) abgreift und als Bezugswert am Eingang eines Spannungsreglers (8) verwendet;
b) Regulierung des Eingangsstroms (Ci) mittels einer zweiten Feedback-Kontrolle, die das Stromsignal (Cu) vor der besagten Last (6) abgreift und als Bezugswert am Eingang eines Stromreglers (11) verwendet;
c) Umwandlung der Eingangsmerkmale der besagten Spannung (Ti) und des besagten Stroms (Ci) mittels einer Wechselrichtervorrichtung (7);
d) Dämpfung der Oberwellen in dieser Ausgangsspannung (Tu) durch einen ersten Dämpfungsvorgang mit Hilfe eines Dämpfungsfilters (13);
e) Verwendung der besagten Ausgangsspannung (Tu) und des besagten Ausgangsstroms (Cu) in der besagten Last (6);
f) Stabilisierung der Merkmale der besagten Ausgangsspannung (Tu) und des besagten Ausgangsstroms (Cu) während des besagten Spannungsregulierungsvorgangs (a) und des besagten Stromregulierungsvorgangs (b),
**dadurch gekennzeichnet, dass** sie außerdem folgenden Vorgang umfasst:
g) Erzielung einer weiteren Dämpfung der Oberwellen durch Implementierung einer sich wiederholenden Kontrolle (23), die parallel zu dem besagten Vorgang der Spannungsregulierung (a) erfolgt, wobei diese Dämpfung langsamer wirkt als der Vorgang (a), der durch den Spannungsregler (8) abgeschlossen wird.

2. Methode gemäß Patentanspruch 1), **dadurch gekennzeichnet, dass** die besagte, sich wiederholende Kontrolle (23) die Einschaltung der Funktion des Transfers des zu eliminierenden Störsignals umfasst, um die Oberwellen in der besagten Ausgangsspannung (Tu) auszugleichen.

3. Methode gemäß eines jeden der vorstehenden Patentansprüche, **dadurch gekennzeichnet, dass** die besagte, sich wiederholende Kontrolle (23) den wiederholten Vorschlag eines Musters der besagten Ausgangsspannung (Tu) als Eingangs-Bezugswert nach einer oder mehreren Musternahmeperioden umfasst.

4. Methode gemäß eines jeden der vorstehenden Patentansprüche, **dadurch gekennzeichnet, dass** die besagte, sich wiederholende Kontrolle (23) gemäß eines mathematischen Algorithmus in einem Mikroprozessor (12) implementiert ist.

5. Methode gemäß Patentanspruch 1), **dadurch gekennzeichnet, dass** der besagte Vorgang (f) zur Stabilisierung der Merkmale der besagten Ausgangsspannung (Tu) und des besagten Ausgangsstroms (Cu) die Einschaltung eines virtuellen Widerstands parallel zur besagten Last (6) umfasst.

6. Methode gemäß Patentanspruch 5), **dadurch gekennzeichnet, dass** der besagte Stabilisierungsvorgang (f) den Zusatz einer oder mehrerer Transferfunktionen (14) umfasst, die dem besagten virtuellen Widerstand in der besagten Rückkopplungskonfiguration mit geschlossenem Doppelkreis entsprechen, in welchem die besagte Spannungsregulierung (a) und die besagte Stromregulierung (b) stattfinden.

7. Methode gemäß Patentanspruch 6), **dadurch gekennzeichnet, dass** die besagte(n), eine oder mehreren Transferfunktion(en) gemäß eines mathematischen Algorithmus in dem besagten Mikroprozessor (12) implementiert ist/sind.

8. Methode gemäß eines jeden der vorstehenden Patentansprüche, **dadurch gekennzeichnet, dass** die besagte Wechselrichtervorrichtung (7) vom einphasigen Typ mit interner Brücke ist.

9. Methode gemäß eines jeden der vorstehenden Patentansprüche, **dadurch gekennzeichnet, dass** die an der besagten, einphasigen Wechselrichtervorrichtung mit interner Brücke (7) angewandte Modulation (71) vom dreistufigen Sinuswellentyp mit dreieckigem Träger ist.

10. Methode gemäß eines jeden der vorstehenden Patentansprüche, **dadurch gekennzeichnet, dass** die besagte Last (6) vom resistiven oder vom nichtlinearen Typ ist.

11. Methode gemäß eines jeden der vorstehenden Patentansprüche, **dadurch gekennzeichnet, dass** der besagte Dämpfungsfilter (13) vom LC-Typ ist und unmittelbar vor der besagten Last (6) positioniert ist.

12. Methode gemäß eines jeden der vorstehenden Patentansprüche, **dadurch gekennzeichnet, dass** der besagte Spannungsregler (8) vom resonanten Typ ist und mit einem mathematischen Algorithmus in dem besagten Mikroprozessor (12) implementiert ist.

13. Methode gemäß eines jeden der vorstehenden Patentansprüche, **dadurch gekennzeichnet, dass** der besagte Stromregler (11) vom resonanten Typ oder vom Proportional-Integral-Typ (PI) ist und mit einem mathematischen Algorithmus in dem besagten Mikroprozessor (12) implementiert ist.

14. Spannungs- und Stromsteuerapparat, eine Wechselrichtervorrichtung (7) umfassend, die an einen Mikroprozessor (12) für die Verarbeitung und den Austausch von Ein- und Ausgangssignalen angeschlossen ist, und einen bezüglich der besagten Wechselrichtervorrichtung (7) stromabwärts angebrachten Dämpfungsfilter (13), wobei der besagte Mikroprozessor (12) Folgendes umfasst:
a) eine erste Feedback-Kontrolle, die das Ausgangsspannungssignal (Tu) von einer Last (6) abgreift und als Bezugswert am Eingang eines Spannungsreglers (8) verwendet, um die Eingangsspannung (Ti) zu regeln;
b) eine zweite Feedback-Kontrolle, die das Stromsignal (Cu) vor der besagten Last (6) abgreift und als Bezugswert am Eingang eines Stromreglers (11) verwendet, um den Eingangsstrom (Ci) zu regeln;
c) Mittel, die so konfiguriert sind, dass die Eingangsmerkmale der besagten Spannung (Ti) und des besagten Stroms (Ci) mit Hilfe der Wechselrichtervorrichtung (7) umgewandelt werden;
d) einen Dämpfungsfilter (13) zur Dämpfung der Oberwellen in der besagten Ausgangsspannung (Tu);
e) Mittel, die so konfiguriert sind, die besagte Ausgangsspannung (Tu) und den besagte Ausgangstrom (Cu) in der besagten Last (6) zu verwenden;
f) Mittel, die so konfiguriert sind, die Merkmale der besagten Ausgangsspannung (Tu) und des besagten Ausgangstroms (Cu) während des besagten Spannungsregulierungsvorgangs (a) und des besagten Stromregulierungsvorgangs (b) zu stabilisieren;
**dadurch gekennzeichnet, dass** er außerdem Mittel umfasst, die so konfiguriert sind, dass sie:
g) eine weitere Dämpfung der Oberwellen durch Implementierung einer sich wiederholenden Kontrolle (23) erzielen, welche parallel zu dem besagten Spannungsregulierungsvorgang (a) stattfindet, wobei diese Dämpfung langsamer wirkt als der durch den Spannungsregler (8) abgeschlossene Vorgang (a).

15. Vorrichtung zur Stromerzeugung des Typs, der an eine Stromerzeugungsvorrichtung (4) angeschlossene Antriebsmittel (3) umfasst, **dadurch gekennzeichnet, dass** sie einen gemäß Patentanspruch 14) ausgeführten Apparat (5) umfasst, der die Spannung und den Strom, die durch die besagte Stromerzeugungsvorrichtung (4) erzeugt werden, kontrolliert.

## Revendications

1. Méthode pour le contrôle de tension et de courant dans un dispositif inverseur (7), dans une configuration rétroactive à anneau double fermé, comprenant les opérations suivantes:
a) régulation de la tension d'entrée (Ti) au moyen d'un premier contrôle rétroactif qui prélève le signal de tension en sortie (Tu) d'une charge (6) et l'utilise comme référence à l'entrée d'un régulateur de tension (8);
b) régulation du courant d'entrée (Ci) au moyen d'un deuxième contrôle rétroactif qui prélève le signal de courant (Cu) en amont de ladite charge (6) et l'utilise comme référence d'un régulateur de courant (11);
c) conversion des caractéristiques d'entrée de ladite tension (Ti) et dudit courant (Ci) au moyen d'un dispositif inverseur (7);
d) atténuation des harmoniques présentes dans ladite tension de sortie (Tu) au moyen d'une première opération d'atténuation grâce à un filtre atténuateur (13);
e) utilisation de ladite tension (Tu) et dudit courant (Cu) de sortie dans ladite charge (6);
f) stabilisation des caractéristiques de ladite tension (Tu) et dudit courant (Cu) de sortie durant ladite opération de réglage de la tension (a) et ladite opération de réglage du courant (b);
**caractérisée en ce qu'**elle comprend en outre l'opération suivante:
g) réalisation d'une atténuation ultérieure des harmoniques en effectuant un contrôle répétitif (23) qui a lieu en parallèle avec ladite opération de réglage de la tension (a), où ladite atténuation se vérifie plus lentement que les opérations (a) achevées par le régulateur de tension (8).

2. Méthode selon la revendication 1), **caractérisée en ce que** ledit contrôle répétitif (23) entraîne l'introduction de la fonction de transfert du signal perturbateur à éliminer de façon à compenser les harmoniques dans ladite tension de sortie (Tu).

3. Méthode selon l'une quelconque des revendications précédentes, **caractérisée en ce que** ledit contrôle répétitif (23) entraîne la proposition répétée comme référence d'un échantillon de ladite tension de sortie (Tu) à l'entrée après un ou plusieurs périodes d'échantillonnage.

4. Méthode selon l'une quelconque des revendications précédentes, **caractérisée en ce que** ledit contrôle répétitif (23) est exécuté avec un algorithme mathématique dans un microprocesseur (12).

5. Méthode selon la revendication 1), **caractérisée en ce que** ladite opération (f) pour stabiliser les caractéristiques de ladite tension de sortie (Tu) et dudit courant de sortie (Cu) entraîne l'introduction d'une résistance virtuelle en parallèle avec ladite charge (6).

6. Méthode selon la revendication 5), **caractérisée en ce que** ladite opération de stabilisation (f) entraîne l'addition d'une ou plusieurs fonctions de transfert (14) équivalant à ladite résistance virtuelle dans ladite configuration rétroactive avec un anneau double fermé dans lequel ledit réglage de tension (a) et ledit réglage de courant (b) se vérifient.

7. Méthode selon la revendication 6), **caractérisée en ce que** lesdites une ou plusieurs fonctions de transfert sont exécutées avec un algorhitme mathématique dans ledit microprocesseur (12).

8. Méthode selon l'une quelconque des revendications précédentes, **caractérisée en ce que** ledit dispositif inverseur (7) est du type monophasé avec pont intérieur.

9. Méthode selon l'une quelconque des revendications précédentes, **caractérisée en ce que** la modulation (71) appliquée audit dispositif inverseur (7) monophasé avec pont intérieur est du type sinusoïdal à trois niveaux avec porteuse triangulaire.

10. Méthode selon l'une quelconque des revendications précédentes, **caractérisée en ce que** ladite charge (6) est du type résistif ou non-linéaire.

11. Méthode selon l'une quelconque des revendications précédentes, **caractérisée en ce que** ledit filtre atténuateur (13) est du type LC et il est positionné immédiatement avant ladite charge (6).

12. Méthode selon l'une quelconque des revendications précédentes, **caractérisée en ce que** ledit régulateur de tension (8) est du type résonnant et est exécuté avec un algorhitme mathématique dans ledit microprocesseur (12).

13. Méthode selon l'une quelconque des revendications précédentes, **caractérisée en ce que** ledit régulateur de courant (11) est du type résonnant ou du type proportionnel intégral (Pl) et est exécuté avec un algorithme mathématique dans ledit microprocesseur (12).

14. Appareil de contrôle de tension et de courant comprenant un dispositif inverseur (7) relié à un microprocesseur (12) pour traiter et échanger des signaux d'entrée et de sortie, et un filtre atténuateur (13) disposé en aval dudit dispositif inverseur (7), où ledit microprocesseur (12) comprend :
a) un premier contrôle rétroactif qui prélève le signal de tension en sortie (Tu) d'une charge (6) et l'utilise comme référence à l'entrée d'un régulateur de tension (8) de façon à régler la tension d'entrée (Ti);
b) un deuxième contrôle rétroactif qui prélève le signal de courant (Cu) en amont de ladite charge (6) et l'utilise comme référence à l'entrée d'un régulateur de courant (11) de façon à régler le courant d'entrée (Ci);
c) des moyens configurés pour convertir lesdites caractéristiques d'entrée de ladite tension (Ti) et dudit courant (Ci) grâce au dispositif inverseur (7);
d) un filtre atténuateur (13) pour atténuer les harmoniques dans ladite tension de sortie (Tu);
e) des moyens configurés pour utiliser ladite tension (Tu) et ledit courant (Cu) de sortie dans ladite charge (6);
f) des moyens configurés pour stabiliser les caractéristiques de ladite tension (Tu) et dudit courant (Cu) de sortie durant ladite opération de réglage de la tension (a) et ladite opération de réglage du courant (b);
**caractérisé en ce qu'**il comprend en outre des moyens configurés pour:
g) atteindre une atténuation ultérieure des harmoniques en exécutant un contrôle répétitif (23) qui a lieu en parallèle avec ladite opération de réglage de la tension (a), où ladite atténuation se vérifie plus lentement que l'opération (a) achevée par le régulateur de tension (8).

15. Dispositif pour la production d'énergie électrique du type comprenant des moyens de motorisation (3) reliés à un dispositif générateur d'énergie électrique (4), **caractérisé en ce qu'**il comprend un appareil (5) pour le contrôle de la tension et du courant générés par ledit dispositif générateur (4) réalisé selon la revendication 14).
